# EUROPEAN PATENT SPECIFICATION

(11) **EP 3 385 130 B1**
(45) Date of publication and mention of the grant of the patent: **06.11.2019**
(21) Application number: 17164637.5
(22) Date of filing: 03.04.2017
(51) Int. Cl.: B60R 22/343, B60R 22/48, B64D 11/06

(54) **RESTRAINT SYSTEM AND METHOD FOR OPERATING SAME**
RÜCKHALTESYSTEM UND VERFAHREN ZU DESSEN BETRIEB
SYSTÈME DE RETENUE ET PROCÉDÉ DE FONCTIONNEMENT D'UN TEL SYSTÈME

(43) Date of publication of application: 10.10.2018
(73) Proprietor: Adient Aerospace, LLC, Kirkland, WA 98033 (US)
(72) Inventor: KREUTZ, Wolfgang, 66879 Reichenbach-Steegen (DE); BURR, Michael, 66894 Langwieden (DE)
(74) Representative: Finger, Catrin

(56) References cited:
- WO-A1-85/01217
- CA-A- 788 864
- DE-A1- 3 903 924
- DE-A1-102015 209 708

## Description

### FIELD OF INVENTION

The invention relates to a restraint system for a seat, in particular for an aircraft seat, and to a method for operating a restraint system.

### DESCRIPTION OF THE RELATED ART

In commercial aircraft passenger seats, conventional static two-point seat belt restraint mechanisms are used which restrain the passenger in the seat. Automotive seat belt retractors with an inertia locking system (so-called emergency locking retractor (ELR)) are provided with an emergency locking mechanism for stopping extraction of the belt when an emergency situation of the vehicle is detected by an acceleration sensor. The occupant can change his position easily in conventional situations of the vehicle. ELR seat belt retractors with an inertia locking system as known from automotive seat belt restraint mechanisms are not used for commercial aircraft because the inertia latching does not work reliable in all aviation cases (e.g. turbulences).

A retractor provided with an automatic locking mechanism for automatically stopping an additional unwinding of the belt after the passenger has buckled up, is referred to as an automatic locking retractor (ALR). The occupant is always restrained securely by the seat belt, so that it is difficult to change position.

DE 91 14 939 U1 discloses a safety belt retractor with an electrical vehicle safety belt lock element which locks the safety belt retractor when a service break of the vehicle is operated.

DE 23 47 036 A1 discloses a vehicle safety belt with an automatic belt retractor device, wherein an unrolling movement can be blocked by a blocker which is sensitive to acceleration of the belt and/or the vehicle, wherein the blocker can additionally be operated by the service break of the vehicle.

DE 102 48 262 B3 discloses a safety system for a vehicle having a control system for controlling a belt spooler locking device with a belt shaft and a device for changing over between acceleration-dependent ELR operation and ALR operation, in which the belt can only be retracted and each extraction of the belt causes blocking of the belt shaft, especially for securing child seats. An electrical control element controlled by an externally triggered electric signal provided for actuating the changeover blocks the belt shaft in ALR mode and enables the control and locking system in ELR mode.

DE 10 2015 209 708 A1 discloses an aircraft according to the preamble of claim 1.

### SUMMARY OF THE INVENTION

It is an object of the present invention to provide an aircraft having an improved restraint system for a seat, and an improved method for operating a restraint system.

The object is achieved by an aircraft according to claim 1 and by a method according to claim 12. Preferred embodiments of the invention are given in the dependent claims.

According to the invention, an aircraft is configured to provide a signal used to issue audible and/or visual output inviting passengers to fasten seat belts, the aircraft having at least one aircraft passenger seat comprising a restraint system, which comprises a restraint belt and a belt retractor for winding up the restraint belt and allowing the restraint belt to be extracted. The restraint system further comprises a blocking device for blocking the belt retractor such that the restraint belt cannot be further extracted, wherein the blocking device is connected to the signal used to issue audible and/or visual output inviting passengers to fasten seat belts, wherein the blocking device is configured to interact with the seat belt retractor such that the seat belt retractor prevents further extraction of the seat belt while the signal is active.

Conventional seat belts in aircraft passenger seats are static pelvic restraint belts having a manually adjustable length but without a retractor for winding the belt up. Conventional retractors block extraction of the seat belts if a predefined acceleration of the seat belt during extraction is exceeded which is not permitted in aircraft as turbulences may subject the passengers to relatively small accelerations which would be insufficient to block belt extraction.

The restraint system according to the invention increases comfort by allowing the passenger to change positions when the signal used to issue audible and/or visual output inviting passengers to fasten seat belts are inactive while maintaining safety of the restraint system, in particular when applied to seat belts for aircraft passenger seats, regardless of whether they are pelvic restraint belts (two-point seat belt) or three-, four-, five- or more point seat belts.

In an exemplary embodiment, the seat belt retractor is an automatic locking retractor (ALR) configured to automatically stop an additional extraction of the belt after extraction of the belt has been stopped.

In an exemplary embodiment, the blocking device comprises a blocking element which keeps the seat belt retractor in an unlocked state so that the belt can be additionally extracted after extraction of the belt has been stopped as long as the blocking element is powered while the signal is inactive.

This increases comfort as opposed to conventional automatic locking retractors without the blocking device in which the belt is always retracted if loose so the passenger's space for movement is increasingly restricted. For example, with a conventional automatic locking retractor, the passenger would have to unbuckle before moving from a standard position into a comfort position or a lying position as this requires more belt length. Furthermore, the passenger could not change from the supine position into the lateral position without unbuckling. The belt will subject the passenger to discomfort as it permanently tends to retract and lock again. The passenger may consequentially not buckle up and will have to be woken up by the cabin crew to buckle up in case of turbulences. These problems may be avoided with the presently claimed restraint system. The passenger experiences more comfort while the signal is inactive without compromising safety while the signal is active or while the power is down as in these cases the ALR belt retractor is in its conventional mode of operation.

In an exemplary embodiment, the seat belt retractor is an emergency locking retractor (ELR) configured to stop extraction of the belt when an emergency situation is detected by an acceleration sensor sensitive to acceleration of the belt and/or the aircraft.

In an exemplary embodiment, the blocking device is configured to block the seat belt retractor when the signal is active so that the belt cannot be further extracted.

In an exemplary embodiment, the blocking device comprises a blocking element which keeps the seat belt retractor in an unlocked state so that the belt can be additionally extracted unless an emergency situation is detected by the acceleration sensor as long as the blocking element is powered while the signal is inactive.

In an exemplary embodiment, the blocking element is a solenoid.

In an exemplary embodiment, the signal is inverted and/or amplified before reaching the blocking element.

In an exemplary embodiment, the restraint belt is a pelvic restraint belt or a three-, four-, five- or more point belt.

According to another aspect of the invention, a method is provided for operating a restraint system for an aircraft seat, comprising a restraint belt and a belt retractor for winding up the restraint belt and allowing the restraint belt to be extracted, further comprising a blocking device for blocking the belt retractor such that the restraint belt cannot be extracted, wherein the blocking device is connected to signal used to issue audible and/or visual output inviting passengers to fasten seat belts. In this method the blocking device is controlled to interact with the seat belt retractor such that the seat belt retractor prevents further extraction of the seat belt while the signal is active.

In an exemplary embodiment, the seat belt retractor is an automatic locking retractor configured to automatically stop an additional extraction of the belt after extraction of the belt has been stopped, wherein the blocking device comprises a blocking element which, while the signal is inactive, is powered so as to keep the seat belt retractor in an unlocked state so that the belt can be additionally extracted after extraction of the belt has been stopped.

In an exemplary embodiment, the seat belt retractor is an emergency locking retractor configured to stop extraction of the belt when an emergency situation is detected by an acceleration sensor sensitive to acceleration of the belt and/or the aircraft, wherein the blocking device blocks the seat belt retractor when the signal is active so that the belt cannot be further extracted.

### BRIEF DESCRIPTION OF THE DRAWINGS

The present invention will become more fully understood from the detailed description given herein below and the accompanying drawing which is given by way of illustration only, and thus, are not limitative of the present invention, and wherein:

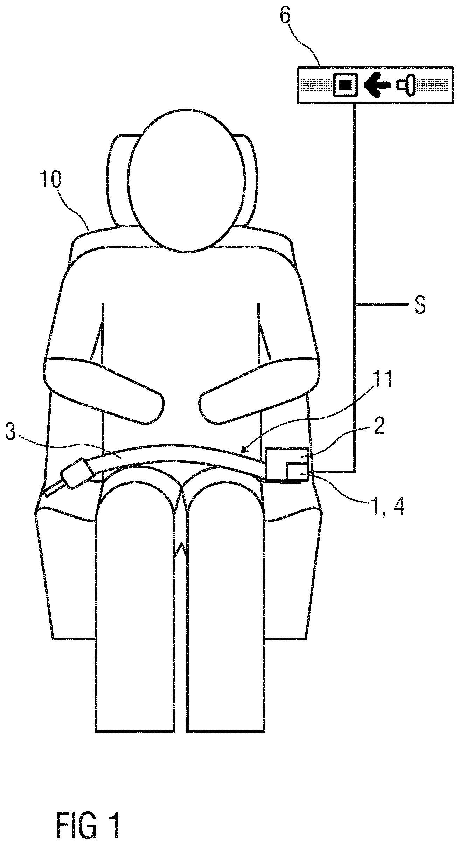

- Figure 1: is a schematic view of a restraint system for an aircraft seat.

### DETAILED DESCRIPTION OF PREFERRED EMBODIMENTS

Figure 1 is a schematic view of a passenger seat 10, in particular for an aircraft. A restraint system 11 is provided, comprising a blocking device 1, a seat belt retractor 2 and a restraint belt 3.

In a first embodiment, the seat belt retractor 2 is an automatic locking retractor (ALR) configured to automatically stop an additional unwinding of the belt 3 after a passenger has buckled up, i.e. the belt 3 has to be pulled out of the seat belt retractor 2 by the passenger. When the passenger stops pulling out the belt 3 and/or closes the belt buckle, the seat belt retractor 2 is blocked so that the belt 3 cannot be extracted further. Further extraction of the belt 3 can only be achieved by optionally releasing the belt buckle, ceasing to pull on the belt 3 and letting the seat belt retractor 2 pull the belt 3 back in and then pulling the belt 3 out again as far as desired.

The blocking device 1 comprises a blocking element 4, e.g. a solenoid, which keeps the seat belt retractor 2 in an unlocked state so that the belt 3 can be extracted further as long as the blocking element 4 is powered, i.e. fed a current. The blocking element 4 is electrically connected to a signal S used to issue audible and/or visual output 6 inviting the passengers to fasten seat belts 3, i.e. during take-off and during landing, such that the blocking element 4 is powered, i.e. fed a current, as long as the signal S is inactive. As soon as the signal S is active, the blocking element 4 is no longer powered and the automatic locking mechanism of the ALR seat belt retractor 2 is back in its conventional operational mode, i.e. it automatically stops an additional unwinding of the belt 3 after the passenger has fastened the seat belt 3. For this purpose, the signal S may be inverted and/or amplified before reaching the blocking element 4. Consequently, a power breakdown in the cabin of the aircraft also causes the automatic locking mechanism of the ALR seat belt retractor 2 to arrive back in its conventional operational mode.

In a second embodiment, the seat belt retractor 2 is an inertia locking retractor or emergency locking retractor (ELR), i.e. the extraction of the belt 3 is stopped when an emergency situation is detected by an acceleration sensor sensitive to acceleration of the belt 3 and/or the aircraft. The blocking device 1 electrically connects the seat belt retractor 2 to a signal S used to issue audible and/or visual output 6 inviting the passengers to fasten seat belts 3, i.e. during take-off and during landing so that the seat belt retractor 2 is blocked when the signal S is active and that the seat belt retractor 2 is unblocked and in its conventional operational mode when the signal S is inactive.

For example, the blocking device 1 comprises a blocking element 4, e.g. a solenoid, which keeps the seat belt retractor 2 in an unlocked state so that the ELR seat belt retractor 2 is in its conventional operational mode, i.e. the extraction of the belt 3 is stopped when an emergency situation is detected by an acceleration sensor sensitive to acceleration of the belt 3 and/or the aircraft, and the belt 3 can be extracted further as long as the blocking element 4 is not powered while the signal S is inactive. As soon as the signal S is active, the blocking element 4 becomes powered and blocks the seat belt retractor 2 so that the belt 3 cannot be further extracted. For this purpose, the signal S may be amplified before reaching the blocking element 4. Consequently, a power breakdown in the cabin of the aircraft causes the automatic locking mechanism of the ELR seat belt retractor 2 to arrive back in its conventional operational mode. In an exemplary embodiment, the signal S may be inverted and/or amplified before reaching the blocking element 4 and the blocking element 4 may be configured to block the seat belt retractor 2 when not powered during a power breakdown or while the signal S is active and to unblock the seat belt retractor 2 when powered while the signal S is inactive.

### LIST OF REFERENCES

- 1: blocking device
- 2: seat belt retractor
- 3: belt
- 4: blocking element
- 6: output
- 10: passenger seat
- 11: restraint system
- S: signal

## Claims

1. An aircraft configured to provide a signal (S) used to issue audible and/or visual output (6) inviting passengers to fasten seat belts (3), the aircraft having at least one aircraft passenger seat (10) comprising a restraint system (11), comprising a restraint belt (3) and a belt retractor (2) for winding up the restraint belt (3) and allowing the restraint belt (3) to be extracted, further comprising a blocking device (1) for blocking the belt retractor (2) such that the restraint belt (3) cannot be extracted, **characterized in that** the blocking device is connected to the signal (S) used to issue audible and/or visual output (6) inviting passengers to fasten seat belts (3), wherein the blocking device (1) is configured to interact with the seat belt retractor (2) such that the seat belt retractor (2) prevents further extraction of the seat belt (3) while the signal (S) is active.

2. The aircraft according to claim 1, wherein the seat belt retractor (2) is an automatic locking retractor configured to automatically stop an additional extraction of the belt (3) after extraction of the belt (3) has been stopped.

3. The aircraft according to claim 2, wherein the blocking device (1) comprises a blocking element (4) which keeps the seat belt retractor (2) in an unlocked state so that the belt (3) can be additionally extracted after extraction of the belt (3) has been stopped as long as the blocking element (4) is powered while the signal (S) is inactive.

4. The aircraft according to claim 1, wherein the seat belt retractor (2) is an emergency locking retractor configured to stop extraction of the belt (3) when an emergency situation is detected by an acceleration sensor sensitive to acceleration of the belt (3) and/or the aircraft.

5. The aircraft according to claim 4, wherein the blocking device (1) is configured to block the seat belt retractor (2) when the signal (S) is active so that the belt (3) cannot be further extracted.

6. The aircraft of claim 5, wherein the blocking device (1) comprises a blocking element (4) which keeps the seat belt retractor (2) in an unlocked state so that the belt (3) can be additionally extracted unless an emergency situation is detected by the acceleration sensor as long as the blocking element (4) is powered while the signal (S) is inactive.

7. The aircraft of claim 3 or 6, wherein the blocking element (4) is a solenoid.

8. The aircraft of any one of claims 3, 6 or 7, wherein the signal (S) is inverted and/or amplified before reaching the blocking element (4).

9. The aircraft of any one of the preceding claims, wherein the restraint belt (3) is a pelvic restraint belt or a three-, four-, five- or more point belt.

10. The aircraft of any one of the preceding claims, having a plurality of aircraft passenger seats (10), at least one of them comprising the restraint system (11).

11. The aircraft of claim 10, wherein each one of the aircraft passenger seats (10) comprises the restraint system (11).

12. A method for operating a restraint system (11) for an aircraft seat (10), comprising a restraint belt (3) and a belt retractor (2) for winding up the restraint belt (3) and allowing the restraint belt (3) to be extracted, further comprising a blocking device (1) for blocking the belt retractor (2) such that the restraint belt (3) cannot be extracted, wherein the blocking device is connected to a signal (S) used to issue audible and/or visual output (6) inviting passengers to fasten seat belts (3), wherein the blocking device (1) is controlled to interact with the seat belt retractor (2) such that the seat belt retractor (2) prevents further extraction of the seat belt (3) while the signal (S) is active.

13. The method of claim 12, wherein the seat belt retractor (2) is an automatic locking retractor configured to automatically stop an additional extraction of the belt (3) after extraction of the belt (3) has been stopped, wherein the blocking device (1) comprises a blocking element (4) which, while the signal (S) is inactive, is powered so as to keep the seat belt retractor (2) in an unlocked state so that the belt (3) can be additionally extracted after extraction of the belt (3) has been stopped.

14. The method of claim 12, wherein the seat belt retractor (2) is an emergency locking retractor configured to stop extraction of the belt (3) when an emergency situation is detected by an acceleration sensor sensitive to acceleration of the belt (3) and/or the aircraft, wherein the blocking device (1) blocks the seat belt retractor (2) when the signal (S) is active so that the belt (3) cannot be further extracted.

## Patentansprüche

1. Luftfahrzeug, das dazu ausgelegt ist, ein Signal (S) bereitzustellen, das verwendet wird, um eine akustische und/oder eine visuelle Ausgabe (6) vorzunehmen, die Passagiere bittet, den Sitzgurt (3) anzulegen, wobei das Luftfahrzeug mindestens einen Luftfahrzeugpassagiersitz (10) aufweist, der ein Rückhaltesystem (11) umfasst, das einen Rückhaltegurt (3) und einen Gurtaufroller (2) zum Aufwickeln des Rückhaltegurts (3) und zum Erlauben des Herausziehens des Rückhaltegurts (3) umfasst, das ferner eine Blockiervorrichtung (1) zum Blockieren des Gurtaufrollers (2) umfasst, derart, dass der Rückhaltegurt (3) nicht herausgezogen werden kann,
**dadurch gekennzeichnet, dass**
die Blockiervorrichtung mit dem Signal (S) verbunden ist, das verwendet wird, um eine akustische und/oder eine visuelle Ausgabe (6) vorzunehmen, die die Passagiere bittet, den Sitzgurt (3) anzulegen, wobei die Blockiervorrichtung (1) dazu ausgelegt ist, mit dem Sitzgurtaufroller (2) derart zu interagieren, dass der Sitzgurtaufroller (2) ein weiteres Herausziehen des Sitzgurts (3) verhindert, während das Signal (S) aktiv ist.

2. Luftfahrzeug gemäß Anspruch 1, wobei der Sitzgurtaufroller (2) eine automatische Aufrollerverriegelung ist, die dazu ausgelegt ist, nachdem das Herausziehen des Gurts (3) gestoppt wurde, ein zusätzliches Herausziehen des Gurts (3) automatisch zu stoppen.

3. Luftfahrzeug gemäß Anspruch 2, wobei die Blockiervorrichtung (1) ein Blockierelement (4) umfasst, das den Sitzgurtaufroller (2) in einem unverriegelten Zustand hält, derart, dass der Gurt (3), nachdem das Herausziehen des Gurts (3) gestoppt wurde, zusätzlich herausgezogen werden kann, solange das Blockierelement (4) mit Strom versorgt wird, während das Signal (S) inaktiv ist.

4. Luftfahrzeug gemäß Anspruch 1, wobei der Sitzgurtaufroller (2) eine Aufrollernotverriegelung ist, die dazu ausgelegt ist, das Herausziehen des Gurts (3) zu stoppen, wenn von einem Beschleunigungssensor, der für eine Beschleunigung des Gurts (3) und/oder des Luftfahrzeugs empfindlich ist, eine Notsituation detektiert wird.

5. Luftfahrzeug gemäß Anspruch 4, wobei die Blockiervorrichtung (1) dazu ausgelegt ist, den Sitzgurtaufroller (2) zu blockieren, wenn das Signal (S) aktiv ist, derart, dass der Gurt (3) nicht weiter herausgezogen werden kann.

6. Luftfahrzeug nach Anspruch 5, wobei die Blockiervorrichtung (1) ein Blockierelement (4) umfasst, das den Sitzgurtaufroller (2) in einem unverriegelten Zustand hält, derart, dass der Gurt (3) zusätzlich herausgezogen werden kann, es sei denn, dass vom Beschleunigungssensor eine Notsituation detektiert wird, solange das Blockierelement (4) mit Strom versorgt wird, während das Signal (S) inaktiv ist.

7. Luftfahrzeug nach Anspruch 3 oder 6, wobei das Blockierelement (4) ein Elektromagnet ist.

8. Luftfahrzeug nach einem der Ansprüche 3, 6 oder 7, wobei das Signal (S) invertiert und/oder verstärkt wird, bevor es das Blockierelement (4) erreicht.

9. Luftfahrzeug nach einem der vorhergehenden Ansprüche, wobei der Rückhaltegurt (3) ein Beckenrückhaltegurt oder ein Drei-, Vier-, Fünf- oder Mehrpunktgurt ist.

10. Luftfahrzeug nach einem der vorhergehenden Ansprüche, das eine Vielzahl von Luftfahrzeugpassagiersitzen (10) aufweist, von denen mindestens einer das Rückhaltesystem (11) umfasst.

11. Luftfahrzeug nach Anspruch 10, wobei jeder der Luftfahrzeugpassagiersitze (10) das Rückhaltesystem (11) umfasst.

12. Verfahren zum Betreiben eines Rückhaltesystems (11) für einen Luftfahrzeugsitz (10), das einen Rückhaltegurt (3) und einen Gurtaufroller (2) zum Aufwickeln des Rückhaltegurts (3) und zum Erlauben des Herausziehens des Rückhaltegurts (3) umfasst, das ferner eine Blockiervorrichtung (1) zum Blockieren des Gurtaufrollers (2) umfasst, derart, dass der Rückhaltegurt (3) nicht herausgezogen werden kann, wobei die Blockiervorrichtung mit einem Signal (S) verbunden ist, das verwendet wird, um eine akustische und/oder eine visuelle Ausgabe (6) vorzunehmen, die die Passagiere bittet, den Sitzgurt (3) anzulegen, wobei die Blockiervorrichtung (1) gesteuert wird, mit dem Sitzgurtaufroller (2) derart zu interagieren, dass der Sitzgurtaufroller (2) ein weiteres Herausziehen des Sitzgurts (3) verhindert, während das Signal (S) aktiv ist.

13. Verfahren nach Anspruch 12, wobei der Sitzgurtaufroller (2) eine automatische Aufrollerverriegelung ist, die dazu ausgelegt ist, nachdem das Herausziehen des Gurts (3) gestoppt wurde, ein zusätzliches Herausziehen des Gurts (3) automatisch zu stoppen, wobei die Blockiervorrichtung (1) ein Blockierelement (4) umfasst, das, während das Signal (S) inaktiv ist, mit Strom versorgt wird, um den Sitzgurtaufroller (2) in einem unverriegelten Zustand zu halten, derart, dass der Gurt (3), nachdem das Herausziehen des Gurts (3) gestoppt wurde, zusätzlich herausgezogen werden kann.

14. Verfahren nach Anspruch 12, wobei der Sitzgurtaufroller (2) eine Aufrollernotverriegelung ist, die dazu ausgelegt ist, das Herausziehen des Gurts (3) zu stoppen, wenn von einem Beschleunigungssensor, der für eine Beschleunigung des Gurts (3) und/oder des Luftfahrzeugs empfindlich ist, eine Notsituation detektiert wird, wobei die Blockiervorrichtung (1) den Sitzgurtaufroller (2) blockiert, wenn das Signal (S) aktiv ist, derart, dass der Gurt (3) nicht weiter herausgezogen werden kann.

## Revendications

1. Aéronef configuré de façon à fournir un signal (S) utilisé pour émettre une sortie sonore et/ou visuelle (6) invitant les passagers à attacher les ceintures de sécurité (3), cet aéronef ayant au moins un siège de passager d'aéronef (10) comportant un système de retenue (11), comprenant une ceinture de retenue (3) et un enrouleur de ceinture (2) pour enrouler la ceinture de retenue (3) et permettre à la ceinture de retenue (3) d'être extraite, comprenant en outre un dispositif de verrouillage (1) pour verrouiller l'enrouleur de ceinture (2) de manière à ce que la ceinture de retenue (3) ne puisse pas être extraite,
**caractérisé en ce que**
le dispositif de verrouillage est connecté au signal (S) utilisé pour émettre une sortie sonore et/ou visuelle (6) invitant les passagers à attacher les ceintures de sécurité (3), le dispositif de verrouillage (1) étant configuré de façon à interagir avec l'enrouleur de ceinture de sécurité (2) de manière à ce que l'enrouleur de ceinture de sécurité (2) empêche une extraction supplémentaire de la ceinture de sécurité (3) tandis que le signal (S) est actif.

2. Aéronef selon la revendication 1, dans lequel l'enrouleur de ceinture de sécurité (2) est un enrouleur à verrouillage automatique configuré de façon à arrêter automatiquement une extraction supplémentaire de la ceinture (3) après que l'extraction de la ceinture (3) a été arrêtée.

3. Aéronef selon la revendication 2, dans lequel le dispositif de verrouillage (1) comprend un élément de verrouillage (4) qui maintient l'enrouleur de ceinture de sécurité (2) dans un état déverrouillé de manière à ce que la ceinture (3) puisse être extraite encore plus après que l'extraction de la ceinture (3) a été arrêtée tant que l'élément de verrouillage (4) est alimenté en courant tandis que le signal (S) est inactif.

4. Aéronef selon la revendication 1, dans lequel l'enrouleur de ceinture de sécurité (2) est un enrouleur à verrouillage d'urgence configuré de façon à arrêter l'extraction de la ceinture (3) lorsqu'une situation d'urgence est détectée par un capteur d'accélération sensible à l'accélération de la ceinture (3) et/ou de l'aéronef.

5. Aéronef selon la revendication 4, dans lequel le dispositif de verrouillage (1) est configuré de façon à verrouiller l'enrouleur de ceinture de sécurité (2) lorsque le signal (S) est actif de manière à ce que la ceinture (3) ne puisse pas être extraite encore plus.

6. Aéronef selon la revendication 5, dans lequel le dispositif de verrouillage (1) comprend un élément de verrouillage (4) qui maintient l'enrouleur de ceinture de sécurité (2) dans un état déverrouillé de manière à ce que la ceinture (3) puisse encore être extraite à moins qu'une situation d'urgence ne soit détectée par le capteur d'accélération tant que l'élément de verrouillage (4) est alimenté en courant tandis que le signal (S) est inactif.

7. Aéronef selon la revendication 3 ou 6, dans lequel l'élément de verrouillage (4) est un solénoïde.

8. Aéronef selon l'une quelconque des revendications 3, 6 ou 7, dans lequel le signal (S) est inversé et/ou amplifié avant d'atteindre l'élément de blocage (4).

9. Aéronef selon l'une quelconque des revendications précédentes, dans lequel la ceinture de retenue (3) est une ceinture de retenue pelvienne ou une ceinture à trois, quatre, cing points ou plus.

10. Aéronef selon l'une quelconque des revendications précédentes, ayant une pluralité de sièges de passagers d'aéronef (10), au moins un d'entre eux comportant le système de retenue (11).

11. Aéronef selon la revendication 10, dans lequel chacun des sièges de passager d'aéronef (10) comporte le système de retenue (11).

12. Procédé d'utilisation d'un système de retenue (11) pour un siège d'aéronef (10), comprenant une ceinture de retenue (3) et un enrouleur de ceinture (2) pour enrouler la ceinture de retenue (3) et permettre à la ceinture de retenue (3) d'être extraite, comprenant en outre un dispositif de verrouillage (1) pour verrouiller l'enrouleur de ceinture (2) de manière à ce que la ceinture de retenue (3) ne puisse pas être extraite, ce dispositif de verrouillage étant connecté à un signal (S) utilisé pour émettre une sortie sonore et/ou visuelle (6) invitant les passagers à attacher les ceintures de sécurité (3), ce dispositif de verrouillage (1) étant commandé de façon à interagir avec l'enrouleur de ceinture de sécurité (2) de manière à ce que l'enrouleur de ceinture de sécurité (2) empêche une extraction supplémentaire de la ceinture de sécurité (3) tandis que le signal (S) est actif.

13. Procédé selon la revendication 12, dans lequel l'enrouleur de ceinture de sécurité (2) est un enrouleur à verrouillage automatique configuré de façon à arrêter automatiquement une extraction supplémentaire de la ceinture (3) après que l'extraction de la ceinture (3) a été arrêtée, le dispositif de verrouillage (1) comportant un élément de verrouillage (4) qui, tandis que le signal (S) est inactif, est alimenté en courant de façon à maintenir l'enrouleur de ceinture de sécurité (2) dans un état déverrouillé de manière à ce que la ceinture (3) puisse être extraite encore plus après que l'extraction de la ceinture (3) a été arrêtée.

14. Procédé selon la revendication 12, dans lequel l'enrouleur de ceinture de sécurité (2) est un enrouleur à verrouillage d'urgence configuré de façon à arrêter l'extraction de la ceinture (3) lorsqu'une situation d'urgence est détectée par un capteur d'accélération sensible à l'accélération de la ceinture (3) et/ou de l'aéronef, le dispositif de verrouillage (1) bloquant l'enrouleur de ceinture de sécurité (2) lorsque le signal (S) est actif de manière à ce que la ceinture (3) ne puisse plus être extraite encore plus.
